(19) Europäisches Patentamt
European Patent Office
Office européen des brevets

(11) Publication number: **0 064 328 B2**

(12) # NEW EUROPEAN PATENT SPECIFICATION

(45) Date of publication of the new patent specification: **31.10.90**

(51) Int. Cl.[5]: **C 01 B 33/34,** B 01 J 29/04

(21) Application number: **82301522.7**

(22) Date of filing: **24.03.82**

(54) **Zeolite and catalytic conversion therewith.**

(30) Priority: **02.04.81 US 250518**

(43) Date of publication of application:
**10.11.82 Bulletin 82/45**

(45) Publication of the grant of the patent:
**06.11.85 Bulletin 85/45**

(45) Mention of the opposition decision:
**31.10.90 Bulletin 90/44**

(84) Designated Contracting States:
**BE DE FR GB IT NL**

(56) References cited:
EP-A-0 010 572
EP-A-0 013 630
EP-A-0 014 023
EP-A-0 014 059
EP-A-0 055 046
GB-A-1 572 135
GB-A-2 056 961
US-A-3 308 069

(73) Proprietor: **MOBIL OIL CORPORATION**
**150 East 42nd Street**
**New York New York 10017 (US)**

(72) Inventor: **Plank, Charles Joseph**
**522 Delaware Street**
**Woodbury New Jersey (US)**
Inventor: **Rosinski, Edward Joseph**
**Route no. 1 Box A**
**Pedricktown New Jersey (US)**
Inventor: **Rubin, Mae Koenig**
**50 Belmont Avenue**
**Bala Cynwyd Pennsylvania (US)**

(74) Representative: **Cooper, John Anthony et al**
**CARPMAELS & RANSFORD 43 Bloomsbury Square**
**London WC1A 2RA (GB)**



Courier Press, Leamington Spa, England.

**Description**

This invention relates to a novel highly siliceous porous crystalline zeolite related to zeolite beta and to its use in catalytic conversion of organic compounds.

Previously, zeolite beta has been prepared from mixtures containing silica and alumina and yielding a product $SiO_2/Al_2O_3$ ratio of 5 but less than 100 as disclosed in US Patent 3,308,069. The materials of the present invention uses Fe and/or Cr as substitute for added $Al_2O_3$ in the synthesis and can yield a product with a silica to alumina ratio greater than 100 up to infinity. EP—A—14059 and 13630 respectively disclose the synthesis of zeolites ZSM-11 and -12 in a form containing chromium and/or iron.

In the as-synthesized form, the material has a calculated composition, in terms of moles of oxides, after dehydration, per 100 moles of silica, as follows:

$$(W)Q_2O\cdot(x)M_{2/n}O\cdot(y)L_2O_3\cdot 100\ SiO_2$$

wherein $Q_2O$ is the oxide form of an organic compound containing an element of Group 5-B*, e.g., N, P, preferably N, containing at least one alkyl or aryl group having between 1 and 7 carbon atoms, preferably between 2 and 5 at least one of which is an ethyl radical, and still more preferably $Q_2O$ is a quaternary ammonium compound containing at least one ethyl group, M is an alkali metal having a valence n, e.g. Na or K, n=valence of M, W=<5, X=<2, Y=<4 and L=Al, Cr, Fe, or mixtures thereof, provided that at least Fe or Cr be present, and the molar ratio $SiO_2/Al_2O_3$ is from 100 to infinity.

The material may have Al, Fe and/or Cr in positions of tetrahedral substitution within the silica lattice, requiring a balancing cationic valence for preservation of electrical neutrality. These cations, if present, may be replaced at least in part by other ions using conventional ion exchange techniques. Ions introduced to replace the original alkali, and/or organic cations may be any that are desired so long as they can pass through the channels within the crystals. Desired replacing ions are those of hydrogen, ammonium and metals of Groups I through VIII of the Periodic Table. Among the metals, those particularly preferred are rare earth metals, manganese, zinc and those of Group VIII of the Periodic Table.

The X-ray diffraction pattern of materials according to the present invention has the following significant lines:

TABLE 1

| Interplanar d-spacing (A') | Relative intensity |
|---|---|
| 11.5±0.3 | M-S |
| 7.4±0.2 | W |
| 6.6±0.15 | W |
| 4.15±0.10 | W |
| 3.97±0.1 | VS |
| 3.0±0.07 | W |
| 2.05±0.05 | W |

These values were determined by standard techniques. The radiation was the K-alpha doublet of copper and a diffractometer equipped with a scintillation counter and an associated computer was used. The peak heights, I, and the positions as a function of 2 theta, where theta is the Bragg angle, were determined using algorithms on the computer associated with the spectrometer. From these, the relative intensities, $100\ I/I_o$, where $I_o$ is the intensity of the strongest line or peak, and the interplanar spacing in A, corresponding to the recorded lines, were determined. In Table 1, the relative intensities are given in terms of the symbols VS=very strong, S=strong and W=weak. This X-ray diffraction pattern is characteristic of all the species of zeolite beta compositions. The sodium form, as well as other cationic forms, reveals substantially the same pattern with some minor shifts in interplanar spacing and variation in relative intensity. Other minor variations can occur, depending on the silicon to aluminum ratio of the particular sample, as well as its degree of thermal treatment.

The new zeolite can be prepared from a reaction mixture containing an intentional source of silica, $Q_2O$, an alkali metal oxide, e.g. sodium, a chromium or iron compound, water, and no added alumina, and having a composition, in terms of mole ratios of oxides, falling within the following ratios:

* National Bureau of Standards (Fischer Scientific Co, Table of the Elements)

| Reactants | | Broad | Preferred |
|---|---|---|---|
| $SiO_2/Q_2O$ | = | 2 to 50 | 4 to 15 |
| $M_2O/Q_2O$ | = | 0.0 to 10 | 0.5 to 4 |
| $(Cr_2O_3+Fe_2O_3)/Q_2O$ | = | 0.05 to 5 | 0.08 to 0.2 |
| $H_2O/Q_2O$ | = | 50 to 500 | 150 to 300 |

wherein $Q_2O$ is the oxide form of an organic compound of an element of Group 5-B of the Periodic Table (e.g. N, P) and can be an organic compound containing at least one ethyl group and M is alkali metal and maintaining the mixture at crystallization temperature until crystals of the highly siliceous crystal material are formed. As mentioned above, no alumina is added to the recipe. The only aluminum present occurs as an impurity in some other component of the crystallization medium.

Crystallization can be carried out at either static or stirred condition in polypropylene jars at 99°C (210°F) or in Teflon® lined stainless steel autoclaves. The total useful range of temperatures is 80°C to about 180°C for about 6 hours to 150 days. Thereafter, the crystals are separated from the liquid and recovered. The composition can be prepared utilizing materials which supply the appropriate oxide. Such compositions include sodium silicate, silica hydrosol, silica gel, silicic acid, sodium hydroxide, chromic potassium sulfate or ferric ammonium sulfate, and an organic compound. The organic compounds can include any element of Group 5-B such as nitrogen or phosphorous, preferably nitrogen. The preferred compounds are quaternary compounds generally expressed by the following formula:

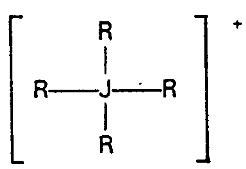

$R_4J^+$

wherein J is an element of Group 5-B of the Periodic Table, e.g. N or P, preferably N, and each R is an alkyl or aryl group having between 1 and 7 carbon atoms, and preferably at least one R group is an ethyl group. While normally each alkyl or aryl group will be the same, it is not necessary that each group have the same number of carbon atoms in the chain. The oxide of the quaternary compound is generally supplied by introducing into the reaction mixture a composition such as the hydroxide or chloride of the tetraalkyl derivative of the desired 5-B element. In preparing an ammonium species, tetraethyl ammonium chloride or bromide or, less preferably, hydroxide is useful. In preparing the phosphonium species, tetraethyl phosphonium chloride is particularly desirable as a means of incorporating the quaternary compound into the crystal. The other elements of Group 5-B behave similarly. The oxide can be supplied from more than one source. The reaction mixture can be prepared either batchwise or continuously. Crystal size and crystallization time will vary with the nature of the reaction mixture employed and the crystallization conditions.

In all cases, synthesis may be facilitated by the presence of at least 0.01 percent, preferably 0.10 percent and still more preferably at least 1.0 percent, seed crystals (based on total weight) of crystalline product.

Catalysts comprising crystals prepared by the instant invention can be formed in a wide variety of particle sizes. Generally speaking, the particles can be in the form of a powder, a granule, or a molded product, such as an extrudate having particle size sufficient to pass through a 2 mesh (Tyler) screen and be retained on a 400 mesh (Tyler) screen. In cases where catalyst is molded, such as by extrusion, the crystal can be extruded before drying or partially dried and then extruded.

Thermal treatment of the zeolites before and after base exchange can be performed by heating one of these forms in an atmosphere such as air, nitrogen, hydrogen or steam at a temperature of at least 371°C (700°F) for at least 1 minute and generally not greater than 20 hours. While subatmospheric pressure can be employed for the thermal treatment, atmospheric pressure is desired for reasons of covenience. The thermal treatment can be performed at a temperature up to about 538°C (1000°F). The thermally treated product is particularly useful in the catalysis of certain hydrocarbon conversion reactions.

The zeolite can be used as a catalyst in intimate combination with a hydrogenating component such as tungsten, vanadium, molybdenum, rhenium, nickel, cobalt, chromium, manganese, or a noble metal such as platinum or palladium where a hydrogenation-dehydrogenation function is desired, such component being introduced by exchange into the composition, impregnation or physical intimate mixing. Such

component can be impregnated for example, in the case of platinum, by treating the zeolite with a solution containing a platinum metal-containing ion. Suitable platinum compounds include chloroplatinic acid, platinous chloride and various compounds containing the platinum amine complex.

It is frequently desirable to composite a zeolite with another material resistant to the temperatures and other conditions employed in organic conversion processes. Such compositing practices and materials are fully descriobed in our EP—A—1695.

Employing a catalytically active form of the novel crystal catalyst of this invention which may contain additional hydrogenation components, reforming stocks can be reformed employing a temperature between 371°C (700°F) and 538°C (1000°F). The pressure can be between 100 and 1000 psig, (5.9—68 bar) but is preferably between 200 and 700 psig. (12.8—47.3 bar). The liquid hourly space velocity is generally between 0.1 and 10, preferably between 0.5 and 4, and the hydrogen to hydrocarbon mole ratio is generally between 1 and 20, preferably between 4 and 12.

Other reactions which can be accomplished employing the zeolite of this invention in association with a metal, e.g. platinum, include hydrogenation-dehydrogenation reactions and desulfurization reactions, olefin polymerization (oligomerization) and other organic compound conversion such as the conversion of alcohols (e.g. methanol) to hydrocarbon.

The following Examples illustrate the nature of the invention and the manner of practicing it. In them, whenever adsorption data are set forth for comparison of sorptive capacities for water, cyclohexane and n-hexane, they were determined as follows:

A weighed sample of the calcined adsorbant was contacted with the desired pure adsorbate vapor in an adsorption chamber, evacuated to $<$1mm and contacted with 12 mm Hg of water vapor or 20 mm Hg of cyclolhexane or n-hexane vapor, pressures less than the vapor-liquid equilibrium pressure of the respective adsorbate at room temperature. The pressure was kept constant (within about $\pm$0.5 mm) by addition of adsorbate vapor controlled by a manostat during the adsorption period, which did not exceed about 8 hours. As adsorbate was adsorbed by the crystal, the decrease in pressure caused the monostat to open a valve which admitted more adsorbate vapor to the chamber to restore the above control pressures. Sorption was complete when the pressure change was not sufficient to activate the monostat. The increase in weight was calculated as the adsorption capacity of the sample in g/100 g of calcined adsorbant.

## Examples 1—9

In these examples, the starting gel reaction mixture was prepared from sources of silica such as Q-Brand sodium silicate (28.8% $SiO_2$, 8.9% $Na_2O$) and S-35 sodium silicate (25.3% $SiO_2$, 6.8% $Na_2O$). Fume silica (HiSil 91.3% $SiO_2$) may also be used. The source of tetraethylammonium organic cation was supplied by either the hydroxide (40% solution) or by salts such as halide. The metal salts used were chromic potassium sulfate and ferric ammonium sulfate. Other salts such as chlorides and nitrates can be used. Moles of $Na_2O$ were excess $Na_2O$ after neutralization of moles of mineral acid added to the mixture. Crystallization was carried out at static conditions in stainless steel autoclaves. After crystals formed, the product was filtered, water washed and dried at 110°C (230°F). The amounts of starting material, identification of same, product compositions, and adsorption data are listed in Tables 2 and 3 set forth immediately hereinbelow.

TABLE 2

Crystallization experiments—Cr beta crystal static system stainless steel reactors

| Example | 1 | 2 | 3 | 4 | 5 | 6 |
|---|---|---|---|---|---|---|
| Reaction Mixture, gms | | | | | | |
| A. Q Brand (28.8% $SiO_2$; 8.9% $Na_2O$) | 30.5 | | | | | |
| $H_2O$ | 20.0 | 53.0 | 53.0 | 53.0 | 53.0 | 53.0 |
| S-35 Silicate (25.3% $SiO_2$, 6.8% $Na_2O$) | | 64.0 | 64.0 | 64.0 | 64.0 | 64.0 |
| B. CrK $(SO_4)_2 \cdot 12H_2O$ | 4.7 | 1.3 | 1.3 | 1.3 | 1.3 | 1.3 |
| $H_2SO_4$ | 0.5 | 1.0 | 1.0 | 1.0 | 1.0 | 1.0 |
| $H_2O$ | 57.0 | 40.0 | 40.0 | 40.0 | 40.0 | 40.0 |
| C. 40% Tetraethylammonium hydroxide | 26.0 | | | | | |
| Tetraethylammonium bromide | | 12.0 | 12.0 | 12.0 | 12.0 | 12.0 |
| Reaction Composition(1), moles | | | | | | |
| $R_2O$(1) | 1.0 | 1.0 | 1.0 | 1.0 | 1.0 | 1.0 |
| $Na_2O$ | 0.57 | 1.90 | 1.90 | 1.90 | 1.90 | 1.90 |
| $Cr_2O_3$ | 0.13 | 0.04 | 0.04 | 0.04 | 0.04 | 0.04 |
| $K_2O$ | 0.13 | 0.04 | 0.04 | 0.04 | 0.04 | 0.04 |
| $SiO_2$ | 4.17 | 9.44 | 9.44 | 9.44 | 9.44 | 9.44 |
| $H_2O$ | 178 | 266 | 266 | 266 | 266 | 266 |
| Crystallization Conditions | | | | | | |
| Temperature°F (°C) | 280 (137.8) | 270 (132.2) | 275 (135) | 270 (132.2) | 270 (132.2) | 270 (132.2) |
| Days | 15 | 21 | 21 | 21 | 15 | 21 |
| X-Ray Analysis | Beta 95% | Beta+ Mordenite+ Quartz | Beta 70%+ Mordenite+ Quartz | Beta 90% | Beta+ Mordenite+ Quartz | Beta 80%+ Mordenite+ Quartz |

TABLE 2 (Continued)

| Example | 1 Not run | 2 | 3[3] | 4 | 5 | 6 |
|---|---|---|---|---|---|---|
| Product Composition, Wt% | | | | | | |
| N | | 1.47 | ——1.60—— | | 1.25 | 1.55 |
| Na | | 0.71 | ——0.44—— | | 0.50 | 0.29 |
| Cr | | 0.31 | ——0.27—— | | 0.35 | 0.24 |
| K | | 0.05 | ——0.05—— | | 0.15 | 0.01 |
| $SiO_2$ | | 76.29 | ——74.55—— | | 77.21 | 76.0 |
| $Al_2O_3$ | | 1.37 | ——1.28—— | | 1.20 | 1.50 |
| Ash | | 85.3 | ——84.75—— | | | 84.3 |
| Product Composition, mole ratio | | | | | | |
| $Al_2O_3$ | | 1.06 | 1.01 | | 0.92 | 1.12 |
| $SiO_2$ | | 100 | 100 | | 100 | 100 |
| $Na_2O$ | | 1.22 | 0.77 | | 0.85 | 0.50 |
| $Cr_2O_3$ | | 0.23 | 0.21 | | 0.27 | 0.19 |
| $Q_2O$[2] | | 4.19 | 4.60 | | 3.48 | 4.35 |
| Adsorption, Wt% (after calcination at 1000°F (538°C) 16 hours) | | | | | | |
| Cyclohexane | | 12.7 | 11.8 | | 10.4 | 12.8 |
| n-Hexane | | 11.3 | 11.6 | | 9.8 | 12.0 |
| $H_2O$ | | 18.0 | 19.3 | | 13.1 | 15.9 |
| Surface Area, $m^2/gm$ 434 | | 400 | 407 | | 361 | 434 |

[1]Reaction composition calculated from added components
[2]Q=tetraethylammonium
[3]Examples 3 and 4 combined for composition analyses

TABLE 3

Crystallization experiments — (Fe) beta crystal static system stainless steel reactors

| Example | 7 | 8 | 9 |
|---|---|---|---|
| Reaction Mixture, gms | | | |
| A. S-35 Sodium Silicate | 64.0 | 64.0 | 96.0 |
| $H_2O$ | 53.0 | 53.0 | 26.0 |
| B. $FeNH_4(SO_4)_2 \cdot 12H_2O$ | 1.3 | 1.3 | 1.3 |
| $LaCl_3 \cdot 6H_2O$ | | | |
| $H_2SO_4$ | 1.0 | 1.0 | 1.0 |
| $H_2O$ | 40.0 | 40.0 | 40.0 |
| C. Tetraethylammonium bromide | 12.0 | 12.0 | 12.0 |
| Reaction Composition[(1)], moles | | | |
| $Q_2O$[(2)] | 1.0 | 1.0 | 1.0 |
| $Na_2O$ | 1.90 | 1.90 | 3.11 |
| $Fe_2O_3$ | 0.047 | 0.047 | 0.047 |
| $SiO_2$ | 9.44 | 9.44 | 14.2 |
| $H_2O$ | 266 | 266 | 256 |
| Crystallization Conditions | | | |
| Temperature°F (°C) | 270 (132.2) | 270 (132.2) | 270 (132.2) |
| Days | 20 | 20 | 20 |
| X-ray Analysis | Beta+ Mordenite+ Quartz | Beta+ Mordenite | Beta 60%+ UCM[(3)] |
| Product Composition, Wt.% | | | |
| N | 1.68 | 1.43 | 1.32 |
| Na | 0.52 | 0.64 | 0.40 |
| Fe | 0.40 | 0.44 | 0.46 |
| $SiO_2$ | 78.0 | 76.8 | 78.2 |
| $Al_2O_3$ | 1.2 | 1.26 | 1.20 |
| Ash | 85.4 | 87.3 | 86.1 |
| Product Composition, mole ratio | | | |
| $Al_2O_3$ | 0.91 | 0.96 | 0.91 |
| $SiO_2$ | 100 | 100 | 100 |
| $Na_2O$ | 0.87 | 1.09 | 0.67 |
| $Fe_2O_3$ | 0.27 | 0.31 | 0.32 |
| $Q_2O$ | 4.62 | 3.99 | 3.64 |
| Adsorption, Wt.% (after calcination at 1000°F (538°C) 16 hours) | | | |
| Cyclohexane | 11.7 | 10.7 | 9.3 |
| n-Hexane | 10.2 | 9.6 | 8.4 |
| $H_2O$ | 18.3 | 15.1 | 12.5 |
| Surface Area, $m^2$/gm | 400 | 387 | 349 |

(1)Reaction composition calculated from added components
(2)Q=tetraethylammonium
(3)UCM=unidentified crystalline material

A review of the foregoing data in Tables 2 and 3 shows that the $Al_2O_3$ content (after drying) of the as-synthesized materials varied from 0.92 (Example 5) to 1.12 Wt.% (Example 6). $Al_2O_3$ was due solely to its presence, if any, as an impurity in the reactants.

Table IV set forth hereinbelow summarizes in tabular form the significant lines of the respective X-ray diffraction patterns obtained from the X-ray analysis of the products of Examples 1—7 inclusive.

TABLE 4

| CR-BETA | | | | | | | | | | FE-BETA | |
|---|---|---|---|---|---|---|---|---|---|---|---|
| Ex. 1 | | Ex. 2 | | Ex. 3+4 | | Ex. 5 | | Ex. 6 | | Ex. 7 | |
| D | INT | D | INT | D | INT | D | INT | D | INT | D | INT |
| 11.41 | 23 | 11.48 | 45 | 11.56 | 27 | 11.48 | 26 | 11.56 | 26 | 11.63 | 27 |
| 7.47 | 2 | 7.56 | 4 | 7.56 | 3 | 7.53 | 3 | 7.56 | 3 | 7.56 | 3 |
| 6.56 | 2 | 6.58 | 3 | 6.56 | 3 | 6.56 | 5 | 6.56 | 3 | 6.61 | 9 |
| 4.11 | 16 | 4.12 | 16 | 4.11 | 17 | 4.12 | 18 | 4.10 | 17 | 4.13 | 16 |
| 3.93 | 100 | 3.93 | 100 | 3.93 | 100 | 3.93 | 100 | 3.93 | 100 | 3.93 | 100 |
| 2.99 | 12 | 3.00 | 11 | 3.01 | 12 | 3.00 | 12 | 3.00 | 12 | 3.00 | 12 |
| 2.05 | 6 | 2.06 | 5 | 2.06 | 6 | 2.06 | 6 | 2.06 | 5 | 2.06 | 6 |

Examples 10—12

The compositions obtained from the exercise of Examples 3 and 4 (combined), 5 and 9 were tested for relative hexane cracking activity (α-values)*, at 538°C (1000°F), and are the subject of the instant examples, respectively. Pertinent details, i.e., conditions of base exchange treatment of the catalysts, compositions after base exchange and calcination, test results and the like, are listed in Table 5 set forth hereinbelow.

Catalytic cracking activity is indicated by the weight percent conversion of hexane to lower boiling $C_1$—$C_5$ hydrocarbons, while isomerization activity is indicated by weight percent conversion to hexane isomerization. Cracking activity is also indicated quantitatively by the term "alpha" (α) which is an indication of the relative catalytic cracking activity of the catalyst compared to a standard catalyst. α is the relative rate constant (rate of n-hexane conversion per unit volume of oxides composition per unit time). It is based on the activity of highly active silica-alumina cracking catalyst taken as α=1.

TABLE 5

Beta-type crystal exchange and catalytic data

| Example | 10 | 11 | 12 |
|---|---|---|---|
| Catalyst Description | Product of Ex.3,4[1] | Ex.5[1] | Ex.9[2] |
| Pre-exchange Treat | T12—538°C (T10—1000°F) | | |
| Exchange | 10% $NH_4Cl$ 5×1 hrs. 185—190°F | | |
| Composition, Wt.% | | | |
| Na | <0.01 | 0.01 | 0.01 |
| Cr | 0.04 | 0.08 | La 0.45 |
| $Al_2O_3$ | 1.5 | | |
| $SiO_2$ | 90.5 | | |
| Ash | 94.9 | | |
| Surface Area, $m^2$/gm (after 538°C (1000°F) treat) | 439 | 401 | 424 |
| α-Test 538°C (1000°F) n-hexane Conversion, Wt% | | | |
| 5 minutes | 50.0 | 63.1 | 50.9 |
| 25 minutes | 32.4 | 46.8 | 33.2 |
| α-Value 5 minutes | 13.2 | 38.0 | 27.1 |
| 25 minutes | 7.5 | 24.0 | 15.4 |

[1]See Table 2
[2]See Table 3

A review of the data obtained in Table 5 reveals that n-hexane conversion after 5 minutes ranged from 50.0 (Example 10) to 63.1 (Example 11) wt.%. α-values ranged after 5 minutes from 13.2 (Example 10) to 38.0 (Example 11).

**Claims**

1. A zeolite having an open three-dimensional framework of $SiO_4$ and $LO_4$ tetrahedra crosslinked by the sharing of oxygen atoms and having, as synthesized, the composition, expressed in terms of moles of anhydrous oxides, as follows:

$$(W)Q_2O\cdot(X)M_{2/n}O\cdot(Y)L_2O_3\cdot 100\ SiO_2$$

wherein $Q_2O$ is the oxide form of an organic compound containing an element of Group 5-B of the Periodic Table, said organic compound having at least one alkyl or aryl group having between 1 and 7 carbon atoms, at least one of which is an ethyl radical, M is an alkali metal having a valence n, W = <5, X = <2, Y = >0 and <4, L = Al, Cr and/or Fe, provided that at least Fe or Cr be present, and the molar ratio $SiO_2/Al_2O_3$ is from 100 to infinity, said zeolite having an x-ray diffraction pattern having the following significant lines:

| Interplanar d-spacing (A') | Relative Intensity |
|---|---|
| 11.5 ± 0.3 | M—S |
| 7.4 ± 0.2 | W |
| 6.6 ± 0.15 | W |
| 4.15 ± 0.10 | W |
| 3.97 ± 0.1 | VS |
| 3.0 ± 0.07 | W |
| 2.05 ± 0.05 | W |

2. A zeolite according to Claim 1 wherein M is hydrogen, ammonium, or a metal of Groups 1—8 of the Periodic Table or mixtures thereof.

3. A zeolite according to Claim 1 or Claim 2 wherein $Q_2O$ is a quaternary ammonium or phosphonium oxide containing at least one ethyl group.

4. A zeolite according to Claim 3 wherein said quaternary ammonium compound is a tetraethylammonium or phosphonium compound and M is sodium or potassium.

5. A zeolite according to any preceding Claim wherein substantially no alumina is present.

6. Use in converting an organic charge of a catalyst comprising a zeolite as claimed in any of Claims 1 to 5.

**Patentansprüche**

1. Zeolith mit einem offenen dreidimensionalen Gitter aus $SiO_4$- und $LO_4$-Tetraedern, die durch Teilung von Sauerstoffatomen verbunden sind, und der, sowie er synthetisiert ist, die folgende in Bezug auf die Mole der wasserfreien Oxide ausgedrückte Zusammensetzung aufweist

$$(W)Q_2O\cdot(X)M_{2/n}O\cdot(Y)L_2O_3\cdot100\ SiO_2,$$

worin $Q_2O$ die Oxidform einer anorganischen Verbindung ist, die ein Element der Gruppe 5-B des Periodensystems enthält, wobei diese organische Verbindung mindestens eine Alkyl- oder Arylgruppe mit 1 bis 7 Kohlenstoffatomen hat, mindestens eine davon ein Ethylradikal ist, M ein Alkalimetall mit der Wertigkeit n ist, $W \leq 5$, $X \leq 2$, $Y \geq 0$ und $< 4$, L = Al, Cr und/oder Fe ist, vorausgesetzt daß mindestens Fe oder Cr vorhanden sind, und das Molverhältnis $SiO_2/Al_2O_3$ von 100 bis unendlich beträgt, wobei der Zeolith ein Röntgenbeugungsdiagramm mit den folgenden kennzeichnenden Linien aufweist:

| d-Netzebenenabstand (A') | Relative Intensität |
|---|---|
| 11,5 ± 0,3 | mittel-stark |
| 7,4 ± 0,2 | schwach |
| 6,6 ± 0,15 | schwach |
| 4,15 ± 0,10 | schwach |
| 3,97 ± 0,1 | sehr stark |
| 3,0 ± 0,07 | schwach |
| 2,05 ± 0,05 | schwach |

2. Zeolith nach Anspruch 1, worin M Wasserstoff, Ammonium oder ein Metall der Gruppen 1 bis 8 des Periodensystems oder Mischungen davon ist.

3. Zeolith nach Anspruch 1 oder 2, worin $Q_2O$ ein quaternäres Ammonium oder Phosphoniumoxid ist, das mindestens eine Ethylgruppe enthält.

4. Zeolith nach Anspruch 3, worin die quaternäre Ammoniumverbindung Tetraethylammonium oder eine Phosphoniumverbindung ist und M Natrium oder Kalium ist.

5. Zeolith nach einem der vorstehenden Ansprüche, worin im wesentlichen kein Aluminiumoxid vorhanden ist.

6. Verwendung eines Katalysators bei der Umwandlung einer organischen Zufuhr, der einen Zeolith nach einem der Ansprüche 1 bis 5 umfaßt.

**Revendications**

1. Une zéolite présentant une structure ouverte à trois dimensions formée de tétraèdres de $SiO_4$ et $LO_4$ réticulés par partage d'atomes d'oxygène et présentant, telle d'obtenue par synthèse, la composition, exprimée en termes de moles d'oxydes anhydres, est la suivante:

$$(W)Q_2O\cdot(X)M_{2/n}O\cdot(Y)L_2O_3\cdot 100\ SiO_2$$

dans laquelle:

$Q_2O$ est la forme oxyde d'un dérivé organique contenant un élément du groupe 5-B de la Classification Périodique des Eléments, ce composé organique possédant au moins un groupe alkyle ou aryle comportant entre 1 et 7 atomes de carbone, au moins l'un de ces groupes étant un radical éthyle;

M représentant un métal alcalin ayant une valence n;

W = <5;

X = <2,

Y = <4; et

L = Al, Cr et/ou Fe ou leurs mélanges, pourvu qu'au moins Cr ou Fe soit présent, et que le rapport molaire $SiO_2/Al_2O_3$ soit compris entre 100 et l'infini, cette zéolite ayant un schéma de diffraction aux rayons X présentant les raies significatives suivantes:

| Espacement d interplanaire (A') | Intensité relative |
|---|---|
| 11,5 ± 0,3 | M—S |
| 7,4 ± 0,2 | W |
| 6,6 ± 0,15 | W |
| 4,15 ± 0,10 | W |
| 3,97 ± 0,1 | VS |
| 3,0 ± 0,07 | W |
| 2,05 ± 0,05 | W |

2. Une zéolite selon la revendication 1, dans laquelle M représente l'hydrogène, l'ammonium ou un métal des groupes I à VIII de la Classification Périodique des Eléments ou leurs mélanges.

3. Une zéolite selon la revendication 1 ou 2, dans laquelle $Q_2O$ représente un oxyde de phosphonium ou d'ammonium quaternaire contenant au moins un groupe éthyle.

4. Une zéolite selon la revendication 3, dans laquelle ce dérivé d'ammonium quaternaire est un dérivé de tétraéthylammonium ou de phosphonium et M représente le sodium ou le potassium.

5. Une zéolite selon l'une quelconque des revendications précédentes sensiblement exemptes d'alumine.

6. Utilisation dans la conversion d'une charge organique d'un catalyseur comprenant une zéolite selon l'une quelconque des revendications 1 à 5.